# EUROPEAN PATENT SPECIFICATION

(11) **EP 2 070 767 B1**
(45) Date of publication and mention of the grant of the patent: **24.11.2010**
(21) Application number: 08170161.7
(22) Date of filing: 27.11.2008
(51) Int. Cl.: B60R 9/045

(54) **A roof bar for a motor vehicle**
Dachstrebe für ein Kraftfahrzeug
Barre de toit pour véhicule à moteur

(30) Priority: 27.11.2007 GB 0723198
(43) Date of publication of application: 17.06.2009
(73) Proprietor: Ford Global Technologies, LLC, Dearborn, MI 48126 (US)
(72) Inventor: Gerhardt Trosten, London, N22 7UL (GB); Harding John, Essex SS9 1NG (GB); Flemming Stephen David, Essex, SS5 4SE (GB); Stanesby Danny Edward, Essex SS7 3TF (GB); Agius Alicia, Bournemouth, BH11 9UB (GB); Farrelly William, Essex, CM2 6HB (GB)
(74) Representative: Grunfeld, David Peter

(56) References cited:
- DE-A1- 4 018 009

## Description

This invention relates to a motor vehicle and in particular to a roof bar for carrying a load on a roof of the motor vehicle.

It is known to provide a motor vehicle with two or more removable roof bars in order to carry objects on the roof of a motor vehicle such as, for example, a roof box, a ladder, scaffold poles, scaffold planks and long lengths of timber. It is a problem with a removable roof bar that considerable time and effort is required to fit or remove the roof bar from the vehicle.

It is a further problem that such fixed but removable roof bars greatly increase the height of the vehicle when they are fitted and, as such, removable roof bars are not ideal for use on a light commercial vehicle such as a van where it is desirable to keep the height of the vehicle below the height restrictions commonly imposed at car park entrances when no load is to be carried on the roof.

It is an object of this invention to provide a stowable roof bar for a motor vehicle that is quick and easy to deploy or stow and does not significantly increase the overall height of the vehicle when it is stowed. Such a roof bar is described in document DE - A1 - 4018009 that discloses the preamble of claim 1.

According to a first aspect of the invention there is provided a stowable roof bar for a motor vehicle comprising an elongate load carrying member pivotally connected to a roof of the vehicle so as to extend across the vehicle and a latch mechanism to selectively hold the elongate load carrying member in a deployed state in which a crossbar portion of the elongate load carrying member is spaced above the roof of the vehicle, wherein a single elongate stay is latchable by means of the latch mechanism to the elongate load carrying member along the length of the elongate load carrying member to hold the roof bar (10) in the deployed state.

This has the advantage that a strong roof bar is produced.

The elongate stay may be of substantially the same length as the elongate load carrying member.

The elongate load carrying member may comprise of a crossbar portion and an end portion at each end of the crossbar portion and the single elongate stay comprises a central portion and a support portion at each end of the central portion.

The end portions of the elongate load carrying member may project above the crossbar so as to provide end stops for the crossbar.

The elongate load carrying member may be H-shaped.

The elongate load carrying member may have a castellated edge formed on the crossbar portion and may be latchable by means of the latch mechanism to a castellated edge of the central portion of the single elongate stay so as to form a load bearing support when the roof bar is in the deployed state.

The central portion of the single elongate stay may be latched along its entire length to the crossbar portion of the elongate load carrying member by the latch mechanism.

The single elongate stay may be latchable by means of the latch mechanism to the elongate load carrying member at several spaced apart positions along the entire length of the elongate load carrying member so as to hold the elongate load carrying member of the roof bar in the deployed state.

The roof bar may further comprise a pair of base plates used to fasten the roof bar to a roof of the motor vehicle, each of the base plates having a respective support portion of the single elongate stay pivotally connected to it near to one end and a respective end portion of the elongate load carrying member pivotally connected to it near to an opposite end.

The latch mechanism may be operable from one end of the roof bar so as to permit the roof bar to be stowed or deployed from one side of the vehicle to which it is fitted.

The latch mechanism may include an axially slideable J-shaped rod that is moveable between an unlocked position in which it is engaged only with the castellations of the elongate load carrying member and a locked position in which it is engaged with the castellations of the elongate load carrying member and the castellations of the single elongate stay.

When the single elongate stay is unlatched from the elongate load carrying member, the elongate load carrying member may be rotatable in one rotational direction so as to lie flat on the roof of the vehicle to which the roof bar is fitted and the single elongate stay is rotatable in an opposite rotational direction so as to lie flat on the roof of the vehicle.

The crossbar portion may be asymmetrical in cross-section having a thickness that is considerably less than the width of the crossbar portion so as to minimise the increase in vehicle height when the roof bar is stowed while retaining a high resistance to bending when a load is carried on the roof bar in the deployed position.

This has the advantage of providing a low stowed height without compromising bending resistance when in use.

The roof of the motor vehicle may have a high point and a low point and the roof bar is fitted so as to be stowable in a open ended transverse channel in the roof of the vehicle wherein the thickness of the components forming the roof bar are such that, when the roof bar is moved to a stowed state, no part of the stowed roof bar is located below the low point of the roof and above the high point of the roof.

This has the advantage that the overall height of the motor vehicle is not increased by the stowed roof bars.

This has the further advantage that the channel into which the stowed roof bar is fitted is self draining.

The thickness of the elongate load carrying member and the single elongate stay may be such that, when the latch mechanism is released so as to permit the roof bar to be moved to a stowed state in which the elongate load carrying member and the elongate stay are folded flat on the roof of the vehicle in a transverse open ended channel, the highest point of the stowed roof bar is lower than a high point on the roof of the motor vehicle so that the overall height of the vehicle is not increased.

According to a second aspect of the invention there is provided a motor vehicle having a roof in which at least two roof bars constructed in accordance with said first aspect of the invention are attached to the roof of the motor vehicle in a spaced apart relationship.

The roof of the motor vehicle may have a high point and a low point corresponding to a height below which a surface is not self draining and a number of transverse open ended channels each sized to accommodate a stowed roof bar, each of the channels having a base surface located no lower than the low point of the roof such that, when each roof bar fitted to the roof of the vehicle is moved to its respective stowed state, no part of each stowed roof bar is located higher than the high point of the roof so that the overall height of the motor vehicle is not increased by the stowed roof bars and no part of each roof bar is located lower than the low point of the roof.

The roof may have a convex central portion bounded on each side by a longitudinally extending drainage ditch and the low point of the roof may correspond to the height of the drainage ditches.

Each of the channels may have a base surface located no lower than the height of the drainage ditches so as to ensure that it is self draining.

The invention will now be described by way of example with reference to the accompanying drawing of which:-
Fig.1 is a side view of a motor vehicle according to the invention;
Fig.2 is rear view of the motor vehicle shown in Fig.1;
Fig.3a is a pictorial schematic view of a roof of the vehicle shown in Figs.1 and 2 showing two transverse open ended channels and a roof bar according to the invention in deployed and stowed states;
Fig.3b is a pictorial view of the right hand side of the roof shown in Fig.3 but with no roof bars in place;
Fig.4a is a scrap transverse cross sectional view of the roof shown in Fig.3b in which the dimensions and curvature have been greatly exaggerated;
Fig.4b is a view similar to that of Fig.4a showing a possible stowage volume for a roof bar according to the invention;
Fig.5 is a pictorial view of a roof bar according to the invention showing the roof bar in a deployed state;
Fig.6 is a plan view of the roof bar shown in Fig.5;
Fig.7 is a plan view similar to that of Fig.6 but showing the roof bar in a stowed state;
Fig.8 is a pictorial view of the roof bar showing the roof bar in a stowed state;
Fig.9 is an enlarged pictorial view of an end portion of the roof bar showing a latch mechanism in an unlatched position;
Fig.10 is an end view of the roof bar shown in Fig.5;
Fig.11 is an end view of the roof bar shown in Fig.7;
Fig.12a is a scrap cross-section through the roof bar corresponding to the position of one castellation formed in a stay member showing a latch mechanism in an unlatched state and the stay member separated from a elongate load carrying member;
Fig.12b is an enlarged view in the region indicated by the arrow E on Fig.12a;
Fig.13a is a scrap cross-section similar to Fig.12a but showing the stay member abutting the elongate load carrying member prior to latching;
Fig.13b is an enlarged view in the region indicated by the arrow E on Fig.13a;
Fig.14a is a scrap cross-section similar to Fig.13a but showing the latch mechanism in a locked position in which it is engaged with the stay member and the elongate load carrying member;
Fig.14b is an enlarged view in the region indicated by the arrow E on Fig.13a;
Fig.15a is a scrap side view in the direction of arrow D on Fig.12a;
Fig.15b is a scrap pictorial view of part of the latch mechanism used to latch the stay and the elongate load carrying member together when the roof bar is in the deployed state.

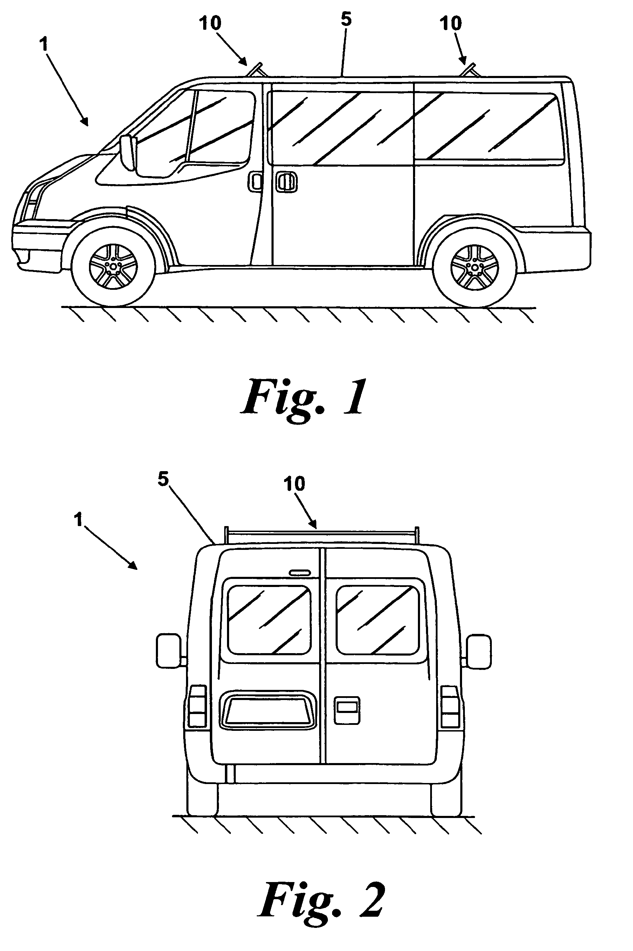

With particular reference to Figs 1 to 4b there is shown a motor vehicle 1 having a roof 5 upon which is mounted two spaced apart identical stowable roof bars 10.

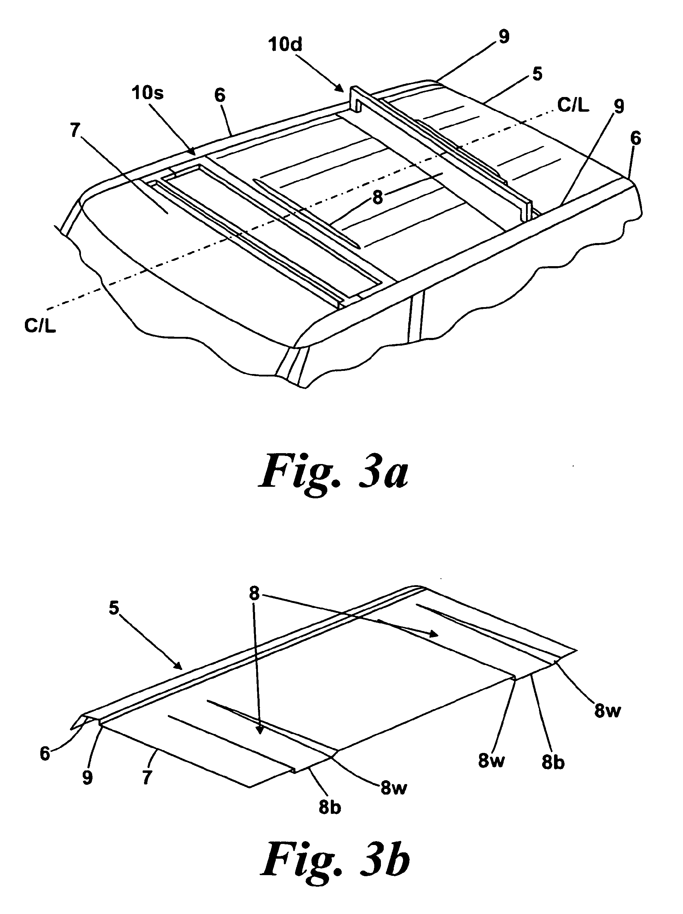

Each of the roof bars 10 is reversibly moveable between a stowed state, indicated by the reference numeral 10s on Fig.3, and a deployed state, indicated by the reference numeral 10d on Fig.3, where it is retainable by a latch mechanism.

In Figs.1 to 3a the motor vehicle is in the form of a van 1 and is shown with two roof bars 10 fitted to its roof 5 but it will be appreciated that more than two roof bars 10 could be fitted to the roof 5.

The roof 5 comprises of a convex central portion 7 bounded on each longitudinal side by a drainage ditch 9, two channels 8 each having side surfaces 8w and a base surface 8b and a ridge 6 running longitudinally along both outer edges of the roof 5.

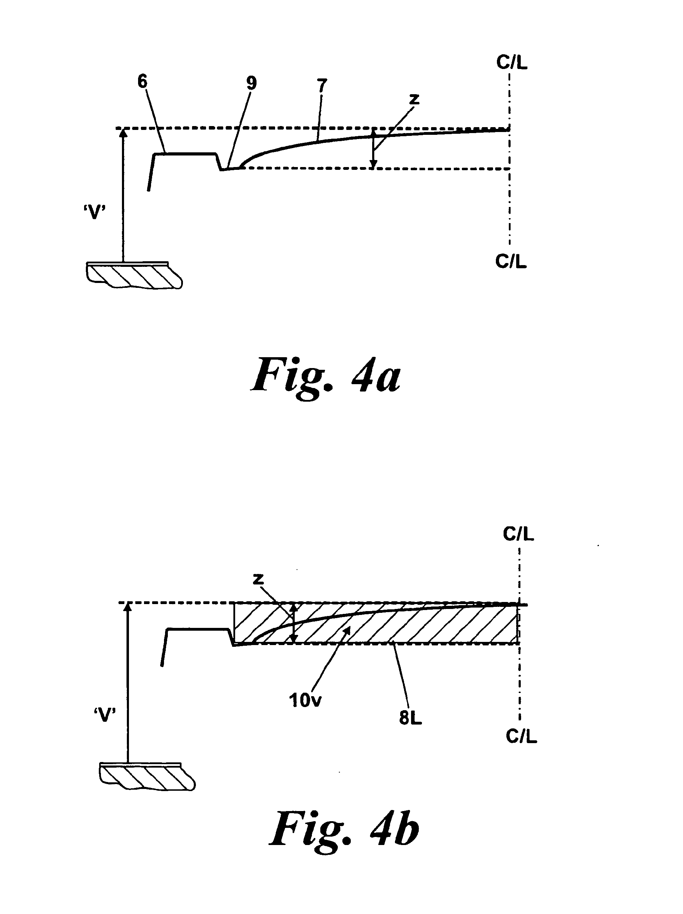

Referring now to Figs.4a and 4b the central roof portion 7 has a high point or crown located on the centre line C/L of the motor vehicle 1 and, in this case, this is also the highest point of the vehicle 1 and so defines the overall height 'v' of the vehicle 1. It will however be appreciated that with some roof forms the height of the ridges 6 may determine the overall height of the vehicle 1.

In the case where the high point is determined by the height of the ridges 6, there will be a difference in height between the high point of the central roof portion 7 and the highest point of the vehicle 1 and this difference in height may be sufficient in some cases to package a stowed roof bar in accordance with this invention. However, in most cases, this difference will not be sufficient to permit a stowed roof bar to be stowed without increasing the vehicle height.

If, as shown, the ridges 6 are lower than the overall height `V' of the vehicle as determined by the high point of the central roof portion 7 a number of the channels 8 must be formed in the central roof portion 7 so as to provide sufficient volume in which to stow each roof bar 10 so that, when the roof bars 10 fitted to the roof of the vehicle 1 are moved to their respective stowed states, no part of the stowed roof bars 1 is located higher than the high point of the roof 5 so that the overall height 'V' of the vehicle 1 is not increased by the stowed roof bars 10. Such channels could also be used even if the high point is the ridges to provide an increased volume for stowing the roof bar 10.

The roof 5 has a low point corresponding to a height below which a surface is not self draining and each roof bar 10 must be stowed on a surface that is no lower than the low point of the roof 5 so that the surface is self draining and to reduce drag, wind noise and improve the aesthetic appearance of the vehicle.

As the low point of the roof 5 corresponds to the height of the drainage ditches 9, each of the channels 8 must have a base surface 8b located no lower than the height of the drainage ditches 9 so as to ensure that the channels 8 are self draining.

In Figs.4a and 4b the dimension z represents the vertical height between the level of the drainage ditches 9 and the high point of the roof 5 and it is this space that can be utilised by incorporating the channels 8 into the roof 5 to stow a roof bar 10. Fig.4b shows as a shaded area 10v the volume that can be occupied by a stowed roof bar 10 without increasing the overall height 'V' of the vehicle 1. The line 8L corresponds to the minimum height of the base surface 8b that must be maintained if the corresponding channel 8 is to be self draining.

Therefore although a roof bar formed in accordance with this invention can be used on many types of roof depending upon their respective configuration and is not limited to a roof having the profile shown, it is desirable for the roof 5 to have a number of open ended channels 8 because these can be used to assist with stowage of the roof bars 10 by providing an additional stowage volume.

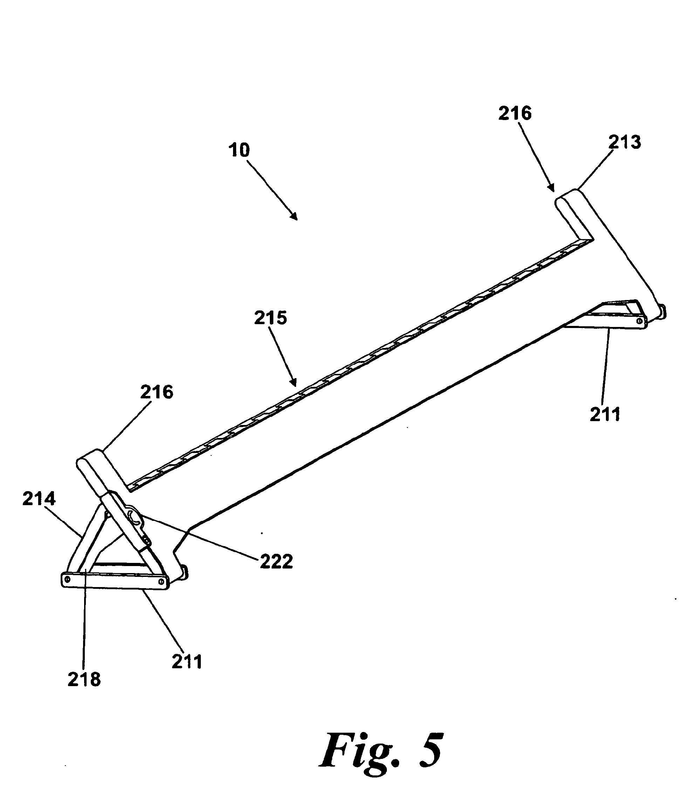

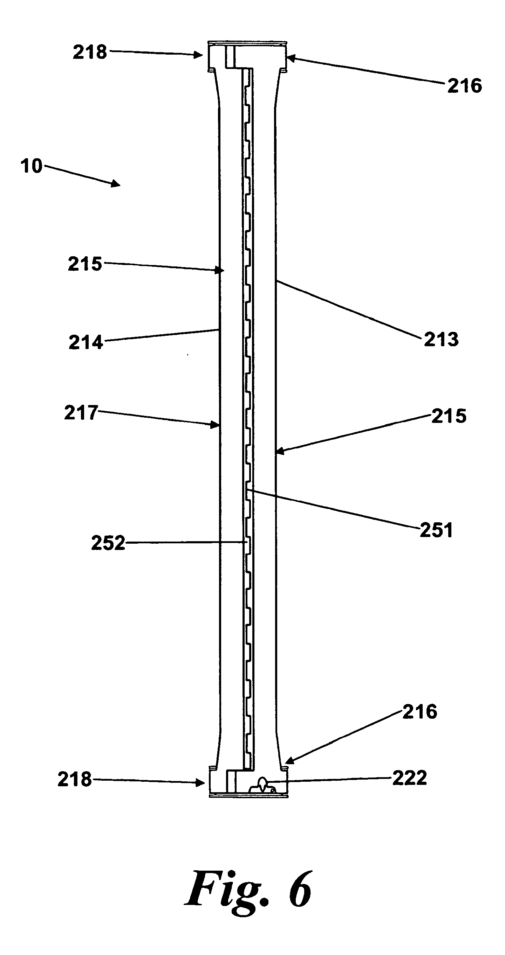

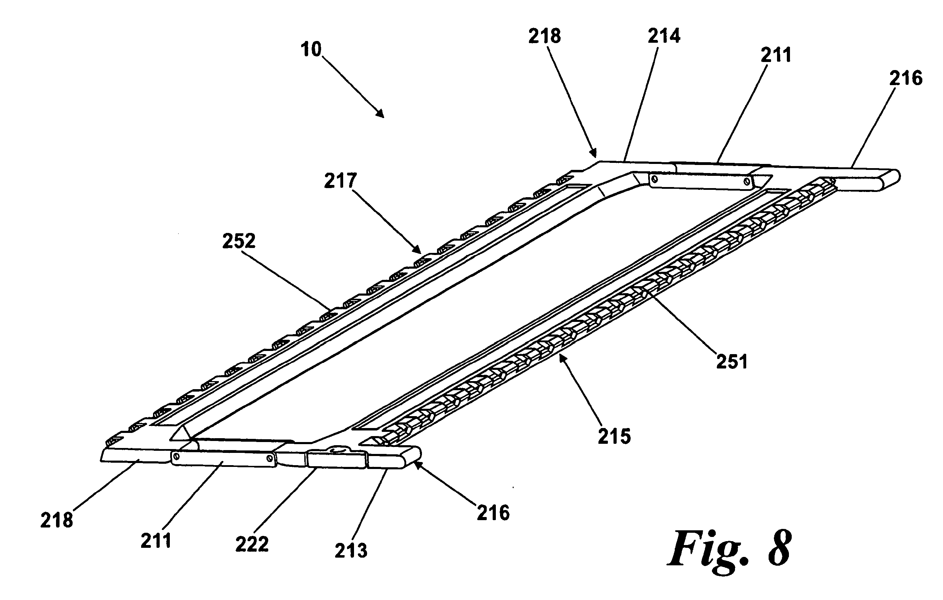

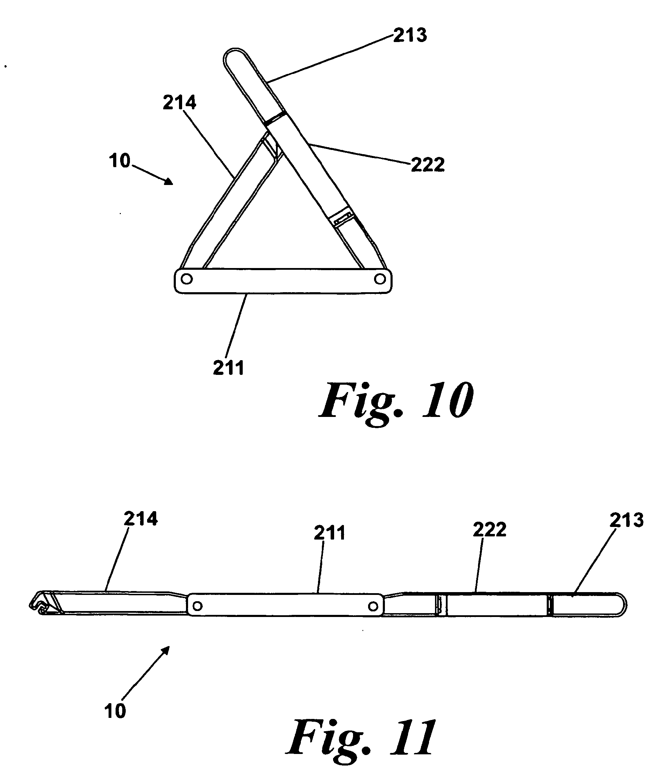

With reference to Figs.5 to 15b there is shown in greater detail the roof bar 10 according to this invention.

The stowable roof bar 10 for a motor vehicle such as the van 1 comprises of an elongate load carrying member 213 pivotally connected to the roof 5 of the vehicle 1 so as to extend across the vehicle 1, a single elongate stay 214 pivotally connected to the roof 5 of the vehicle 1 and a latch mechanism to selectively latch the single elongate stay 214 to the elongate load carrying member 213 so as to hold the elongate load carrying member 213 in a deployed state in which a crossbar portion 215 of the elongate load carrying member 213 is spaced above the roof 5 of the vehicle 1.

The elongate load carrying member 213 is H-shaped and comprises of the crossbar portion 215 and two end portions 216 located at opposite ends of the crossbar portion 215. The end portions 216 are used to space the crossbar 215 above the roof 5 when the roof bar 10 is in the deployed state and provide end stops for the crossbar 215 so as to prevent an item secured to the roof bar 10 from sliding off either end of the crossbar 215. That is to say, the end portions 216 of the elongate load carrying member 213 project above the crossbar portion 215 when the roof bar 10 is in use so as to provide end stops for the crossbar portion 215.

The single elongate stay 214 is of substantially the same length as the elongate load carrying member 213 so as to span substantially the entire width of the vehicle roof 5 to which the roof bar 10 is fitted. The single elongate stay 214 is substantially U-shaped and comprises a central portion 217 and a respective support portion 218 at each end of the central portion 217.

The elongate stay 214 is latchable to the elongate load carrying member 213 to hold the roof bar 210 in the deployed state and the central portion 217 of the elongate stay 214 has a number of castellations 252 formed along one edge so as to form a castellated edge. The crossbar 215 of the elongate load carrying member 213 also has a number of castellations 251 formed along one edge so as to form a castellated edge for intermeshing engagement with a corresponding castellated edge of the elongate stay 214.

The castellated edge of the elongate load carrying member 213 is latchable by means of a latch mechanism 222, 255 to the castellated edge of the elongate stay 214 so as to form a load bearing support when the roof bar 210 is in the deployed state. The arrangement of the castellated edges of the cross bar portion 215 and the central portion 217 of the elongate stay 214 means that the cross bar portion is latched to the elongate stay 214 along substantially its entire length thereby producing a very strong interconnection.

The latch mechanism includes an axially slideable J-shaped rod 255 that is moveable by a handle 222 between an unlocked position in which it is engaged only with the castellations 251 of the elongate load carrying member 213 and a locked position in which it is engaged with the castellations 251 of the elongate load carrying member 213 and the castellations 252 of the single elongate stay 214.

One advantage of this latch mechanism is that it can be operated from one end of the roof bar 10 thereby allowing a user to deploy or stow the roof bar 10 from one side of the vehicle 1 in a simple manner without the need to walk round the vehicle 1 to release latches on opposite sides of the vehicle or requiring two people to release latches on opposite sides of the vehicle 1.

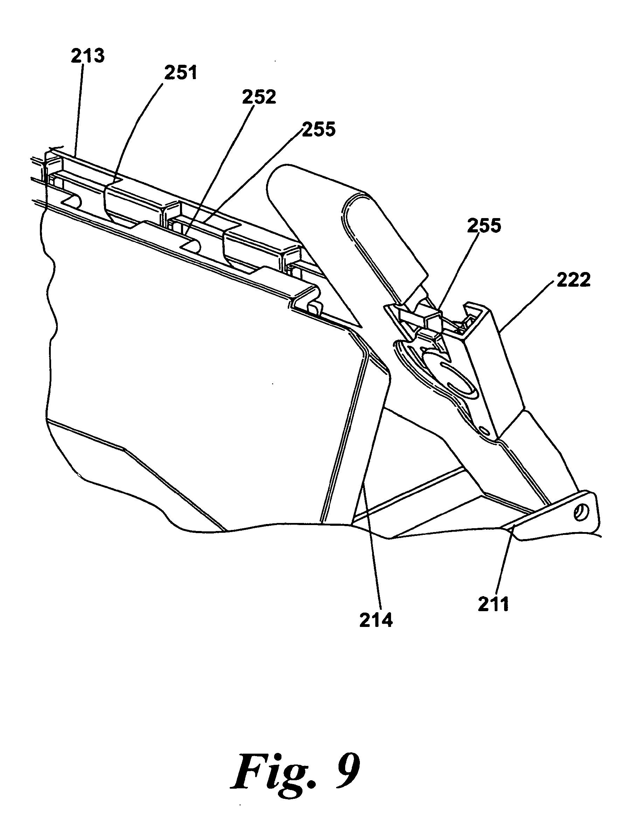

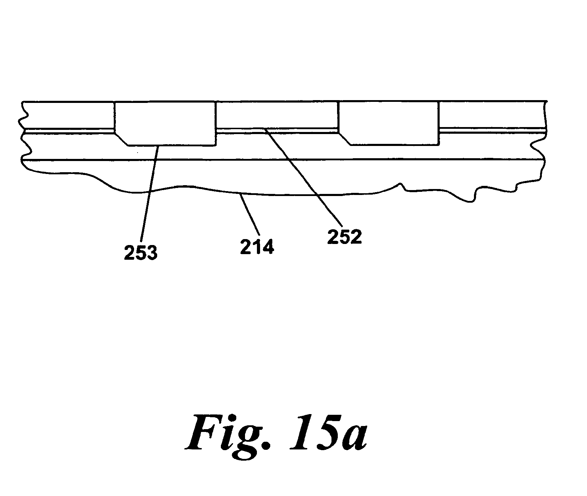

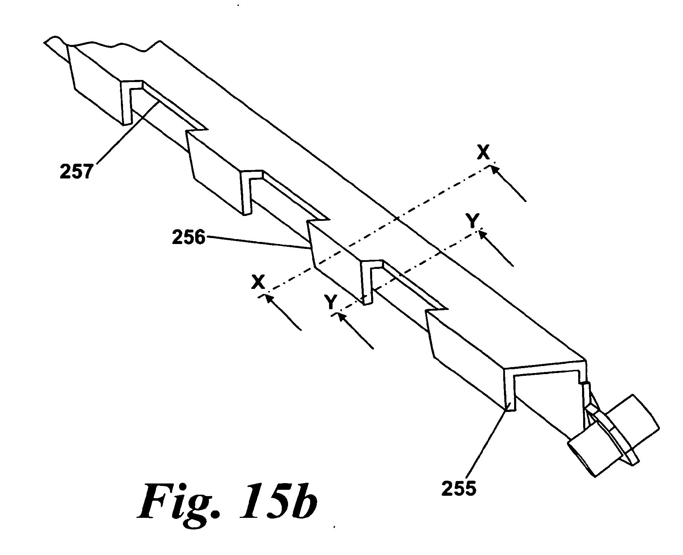

As can best been seen with reference to Figs.9, 15a and 15b, the rod 255 has a number of castellations 256 formed by cut-outs 257. Each of the castellations 256 is sized such that when the rod 255 is moved to the unlatched position the castellations 256 lie primarily within the castellations 251 on the elongate load carrying member 213. If the elongate stay 214 is brought into contact with the elongate load carrying member 213 the castellations 251 engage with cut-outs 253 defining the castellations 252 on the elongate stay 214 and the cut-outs 257 in the J-shaped rod 255 can slide into engagement with the castellations 252.

By axially moving the rod 255 the castellations 256 on the rod 255 engage with the castellations 252 on the elongate stay 214 thereby locking the two components together.

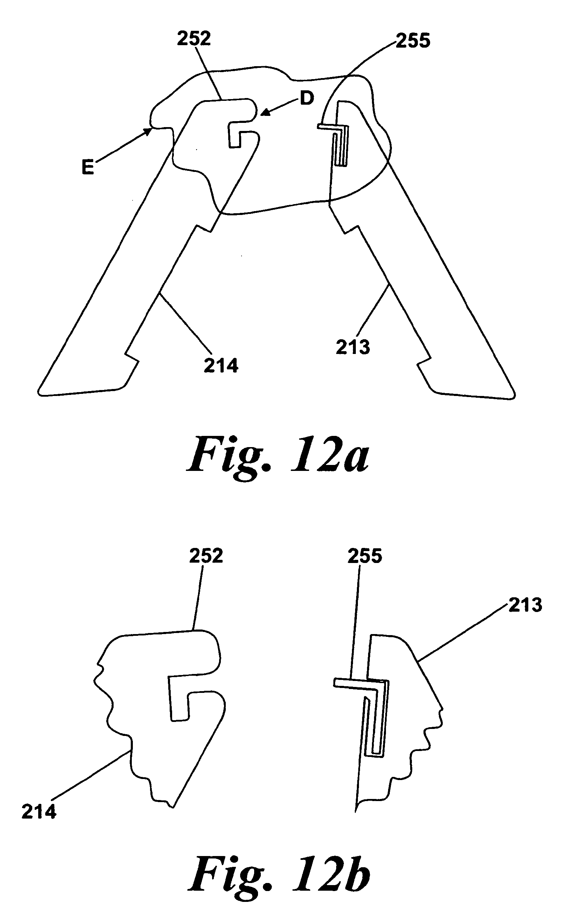

Figs.12a and 12b show the situation when the elongate load carrying member 213 and the stay 214 are separated ready for securing together. The section corresponds to a section through one of the castellations 252 on the elongate stay 214 and to the section y-y on Fig. 15b.

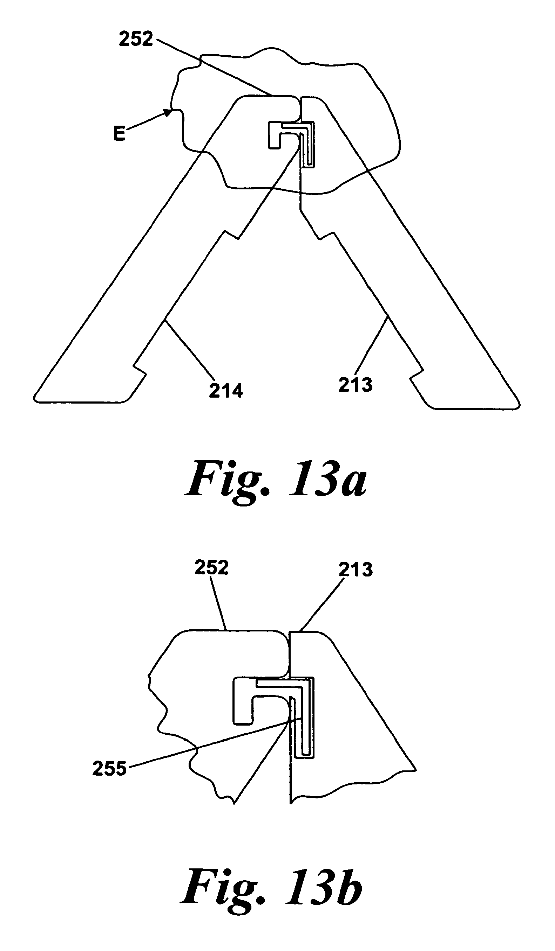

Figs.13a and 13b show the situation prior to latching when the elongate load carrying member 213 and the stay 214 have been brought together to form the deployed state. The section corresponds to a section through one of the castellations 252 on the elongate stay 214 and to the section y-y on Fig. 15b.

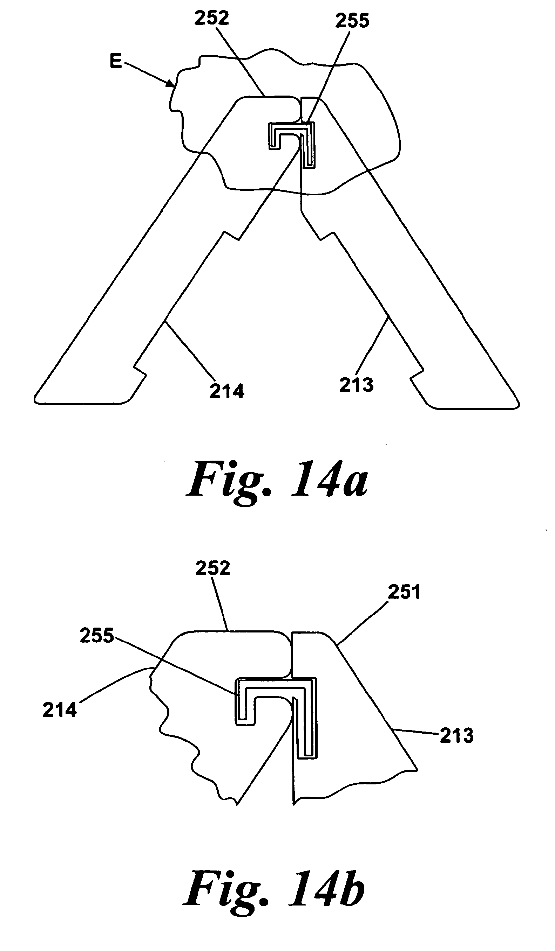

Figs.14a and 14b show the situation when the elongate load carrying member 213 and the stay 214 have been brought together to form the deployed state and have been secured or latched together by axially moving the rod 255 using the handle 222. The section corresponds to a section through one of the castellations 252 on the elongate stay 214 and to the section x-x on Fig.15b.

It will be appreciated that less castellations than those shown could be employed.

It will be further appreciated that alternative types of securing means such as a mechanism activated at one end of the roof bar 10 by rotary motion could be used to replace the latch mechanism shown and described above. That is to say a rod with a number of hooks supported by one of the elongate load carrying member and the elongate stay could be rotatable in one direction so as to engage the hooks with apertures formed in the other of the elongate load carrying member and the elongate stay so as to clamp the two parts together and rotatable in an opposite direction so as to release the two parts so as to allow them to be stowed.

The roof bar 10 is fastened to the roof 5 of the vehicle 1 by a pair of base plates 211 located at opposite ends of the roof bar 10.

Each of the base plates 211 has a respective support portion 218 of the single elongate stay 214 pivotally connected to it near to one end and a respective end portion 216 of the elongate load carrying member 213 pivotally connected to it near to an opposite end.

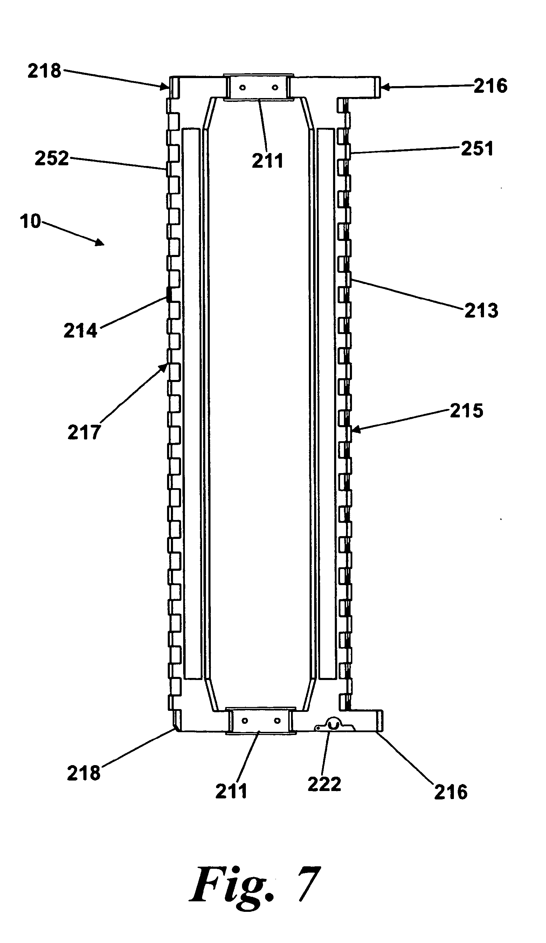

The connection of the elongate load carrying member 213 and the elongate stay 214 to the two base plates 211 is such that, when the elongate stay 214 is unlatched from the elongate load carrying member 214, the elongate load carrying member 213 is rotatable in one rotational direction so as to lie flat on the roof 5 of the vehicle 1 and the elongate stay 214 is rotatable in an opposite rotational direction so as to lie flat on the roof 5 of the vehicle 1 as best seen in Figs.7, 8 and 11.

The thickness of the elongate load carrying member 213 and the thickness of the elongate stay 214 are such that, when the roof bar 210 is moved to the stowed state, the highest point of the stowed roof bar 210 is lower than a high point on the roof 5 of the motor vehicle so that the overall height of the vehicle 1 is not increased. In most case this requires a thickness of between 15 and 20 mm to be used for these components and for the base plates 211.

One of the features of the roof bar 10 is that the thickness of the crossbar portion 215 of the elongate load carrying member 213 is considerably less than the width of the crossbar portion 215 and similarly, the thickness of the central portion 217 of the elongate stay 214 is considerably less than the width of the central portion 217. This allows the roof bar 10 when stowed to have minimal impact on the overall height of the vehicle 1 but when deployed have a high resistance to bending due to the relatively high second moment of area when the roof bar 10 is in the deployed position. The use of asymmetrical sections for the crossbar portion 215 and the central portion 217 is therefore advantageous and desirable. Widths in the range of 50 to 125mm could be used for crossbar portion 215 and the central portion 217 whereas the thickness of these parts is typically in the range 15 to 20 mm.

The roof bar 10 is stowed in one of the open ended channels 8 formed in the roof 5 as this enables the thickness of the elongate load carrying member 213 and the thickness of the elongate stay 214 to be greater than would otherwise be the case. If such a channel 8 is used it will be appreciated that it must be self draining and so must have a base surface 8b no lower than the height of any drainage channels or ditches 9 formed in the roof 5.

It may also be desirable to use two channels to stow the roof bar 210, one for the elongate load carrying member 213 and one for the elongate stay 214.

One advantage of this embodiment of a roof rack 210 is that the load bearing surface is not limited to the thickness of the crossbar portion 215 but is the sum of the top surfaces of the cross bar portion 215 and the central portion 217 of the single elongate stay 214, less the overlap of the castellations, the total of which is always greater than the thickness of the crossbar portion 215 alone.

In addition, if the top surfaces of the cross bar portion 215 and the central portion 217 are inclined relative to the sides of the respective portion 215, 217 (as can best be seen in Fig.9) so as to be substantially horizontally arranged when the roof bar 10 is in the deployed position, the load bearing surface advantage is further increased because the width of the respective top surfaces of the crossbar portion 215 and the central portion 217 are wider than the respective thickness of these parts.

Another advantage of this invention is that the castellated latching of the crossbar portion 215 to the central portion 217 of the single elongate stay 217 along a significant length of the roof bar 10 greatly increases the stiffness of the roof bar 10 for horizontal and axial loads.

Operation of the handle 222 in a direction away from the elongate load carrying member 213 slides the rod 255 so that the single elongate stay 214 is unlatched thereby allowing the roof bar 10 to be stowed by rotating the elongate load carrying member 213 in one rotational direction so as to lie flat on the roof 5 of the vehicle 1 and rotating the single elongate stay 214 in an opposite rotational direction so as to lie flat on the roof 5 of the vehicle 1.

From the stowed position, rotation of the elongate load carrying member 213 and the single elongate stay 214 in the opposite directions used to stow the roof bar 10 brings the castellations 251, 252 into intermeshing engagement and moving the handle 222 towards the elongate load carrying member 213 then moves the rod 255 so as to latch the two parts 213, 214 together.

Although in most cases the number of channels formed in the roof of the vehicle will normally be the same as the number of roof bars fitted to the vehicle it will be appreciated that a roof could be formed with more channels than required to accommodate the fitted roof bars to allow for the fitting of more roof bars than normally fitted in the event that very heavy loads are to be carried.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as set out in the appended claims.

## Claims

1. A stowable roof bar (10) for a motor vehicle (1) comprising an elongate load carrying member (213) pivotally connected to a roof (5) of the vehicle (1) so as to extend across the vehicle (1) and a latch mechanism (222, 255) to selectively hold the elongate load carrying member (213) in a deployed state in which a crossbar portion (215) of the elongate load carrying member (213) is spaced above the roof (5) of the vehicle (1) **characterised in that** a single elongate stay (214) is latchable by means of the latch mechanism (222, 255) to the elongate load carrying member (213) along the length of the elongate load carrying member (213) to hold the roof bar (10) in the deployed state

2. A roof bar as claimed in claim 1 wherein the elongate load carrying member (213) comprises of a crossbar portion (215) and an end portion (216) at each end of the crossbar portion (215) and the single elongate stay (214) comprises a central portion (217) and a support portion (218) at each end of the central portion (217).

3. A roof bar as claimed in claim 2 wherein the elongate load carrying member has a castellated edge (251) formed on the crossbar portion (215) and is latchable by means of the latch mechanism (222, 255) to a castellated edge (252) of the central portion (217) of the single elongate stay (214) so as to form a load bearing support when the roof bar (10) is in the deployed state.

4. A roof bar as claimed in claim 2 or in claim 3 wherein the central portion (217) of the single elongate stay (214) is latched along its entire length to the crossbar portion (215) of the elongate load carrying member (213) by the latch mechanism (222, 255).

5. A roof bar as claimed in any of claims 2 to 4 wherein the roof bar (10) further comprises a pair of base plates (211) used to fasten the roof bar (10) to the roof (5) of the motor vehicle (1), each of the base plates (211) having a respective support portion (218) of the single elongate stay (214) pivotally connected to it near to one end and a respective end portion (216) of the elongate load carrying member (213) pivotally connected to it near to an opposite end.

6. A roof bar as claimed in any of claims 1 to 5 wherein the latch mechanism (222, 255) is operable from one end of the roof bar (10) so as to permit the roof bar (10) to be stowed or deployed from one side of the vehicle (1) to which it is fitted.

7. A roof bar as claimed in any of claims 1 to 6 wherein the latch mechanism includes an axially slideable J-shaped rod (255) that is moveable between an unlocked position in which it is engaged only with the castellations (251) of the elongate load carrying member (213) and a locked position in which it is engaged with the castellations (251) of the elongate load carrying member (213) and the castellations (252) of the single elongate stay (214).

8. A roof bar as claimed in any of claims 1 to 7 wherein, when the single elongate stay (214) is unlatched from the elongate load carrying member (213), the elongate load carrying member (213) is rotatable in one rotational direction so as to lie flat on the roof (5) of the vehicle (1) to which the roof bar (10) is fitted and the single elongate stay (214) is rotatable in an opposite rotational direction so as to lie flat on the roof (5) of the vehicle (1).

9. A roof bar as claimed in any of claims 1 to 8 wherein the crossbar portion (215) is asymmetrical in cross-section having a thickness that is considerably less than the width of the crossbar portion (215) so as to minimise the increase in vehicle height when the roof bar (10) is stowed while retaining a high resistance to bending when a load is carried on the roof bar (10) in the deployed position.

10. A roof bar as claimed in any of claims 1 to 9 in which the roof (5) of the motor vehicle (1) has a high point and a low point and the roof bar (10) is fitted so as to be stowable in a open ended transverse channel (8) in the roof (5) of the vehicle (1) wherein the thickness of the components forming the roof bar (10) are such that, when the roof bar (10) is moved to a stowed state, no part of the stowed roof bar (10) is located below the low point of the roof (5) and above the high point of the roof (5).

11. A motor vehicle (1) having a roof (5) **characterised in that** at least two roof bars (10) as claimed in any of claims 1 to 10 are attached to the roof (5) of the motor vehicle (1) in a spaced apart relationship.

12. A motor vehicle as claimed in claim 10 wherein the roof (5) of the motor vehicle (1) has a high point and a low point corresponding to a height below which a surface is not self draining and a number of transverse open ended channels (8) each sized to accommodate a stowed roof bar (10), each of the channels (8) having a base surface (8b) located no lower than the low point of the roof (5) such that, when each roof bar (10) fitted to the roof (5) of the vehicle (1) is moved to its respective stowed state, no part of each stowed roof bar (10) is located higher than the high point of the roof (5) so that the overall height of the motor vehicle (1) is not increased by the stowed roof bars (10) and no part of each roof bar (10) is located lower than the low point of the roof (5).

13. A motor vehicle as claimed in claim 11 wherein the roof has a convex central portion (7) bounded on each side by a longitudinally extending drainage ditch (9) and the low point of the roof (5) corresponds to the height of the drainage ditches (9).

14. A motor vehicle as claimed in claim 12 wherein each of the channels (8) has a base surface (8b) located no lower than the height of the drainage ditches (9) so as to ensure that it is self draining.

## Patentansprüche

1. Verstaubare Dachreling (10) für ein Kraftfahrzeug (1), die ein längliches Lasttragglied (213), das mit einem Dach (5) des Fahrzeugs (1) schwenkbar verbunden ist, so dass es sich quer über das Fahrzeug (1) erstreckt, und einen Verriegelungsmechanismus (222, 255) zum gezielten Halten des länglichen Lasttragglieds (213) in einem ausgeklappten Zustand, in dem ein Querträgerteil (215) des länglichen Lasttragglieds (213) über dem Dach (5) des Fahrzeugs (1) beabstandet ist, umfasst, **dadurch gekennzeichnet, dass** eine einzelne längliche Strebe (214) mittels des Verriegelungsmechanismus (222, 255) mit dem länglichen Lasttragglied (213) entlang der Länge des länglichen Lasttragglieds (213) verriegelt werden kann, um die Dachreling (10) in dem ausgeklappten Zustand zu halten.

2. Dachreling nach Anspruch 1, wobei das längliche Lasttragglied (213) einen Querträgerteil (215) und einen Endteil (216) an jedem Ende des Querträgerteils (215) umfasst und die einzelne längliche Strebe (214) einen mittleren Teil (217) und einen Stützteil (218) an jedem Ende des mittleren Teils (217) umfasst.

3. Dachreling nach Anspruch 2, wobei das längliche Lasttragglied einen zinnenartigen Rand (251) aufweist, der an dem Querträgerteil (215) ausgebildet ist, und durch den Verriegelungsmechanismus (222, 255) mit einem zinnenartigen Rand (252) des mittleren Teils (217) der einzelnen länglichen Strebe (214) verriegelt werden kann, um eine Lasttragstütze zu bilden, wenn sich die Dachreling (10) in einem ausgeklappten Zustand befindet.

4. Dachreling nach Anspruch 2 oder 3, wobei der mittlere Teil (217) der einzelnen länglichen Strebe (214) durch den Verriegelungsmechanismus (222, 255) entlang seiner gesamten Länge mit dem Querträgerteil (215) des länglichen Lasttragglieds (213) verriegelt ist.

5. Dachreling nach einem der Ansprüche 2 bis 4, wobei die Dachreling (10) weiterhin ein Paar Grundplatten (211) umfasst, die zum Anbringen der Dachreling (10) an dem Dach (5) des Kraftfahrzeugs (1) verwendet werden, wobei jede der Grundplatten (211) einen jeweiligen Stützteil (218) der einzelnen länglichen Strebe (214), der nahe einem Ende schwenkbar damit verbunden ist, und einen jeweiligen Endteil (216) des länglichen Lasttragglieds (213), der nahe einem gegenüberliegenden Ende schwenkbar damit verbunden ist, aufweist.

6. Dachreling nach einem der Ansprüche 1 bis 5, wobei der Verriegelungsmechanismus (222, 255) von einem Ende der Dachreling (10) aus betätigt werden kann, um ein Verstauen oder Ausklappen der Dachreling (10) von einer Seite des Fahrzeugs (1), an der sie angebracht ist, zu gestatten.

7. Dachreling nach einem der Ansprüche 1 bis 6, wobei der Verriegelungsmechanismus eine axial verschiebbare J-förmige Stange (255) enthält, die zwischen einer entriegelten Position, in der sie nur mit den Zinnen (251) des länglichen Lasttragglieds (213) in Eingriff steht, und einer verriegelten Position, in der sie mit den Zinnen (251) des länglichen Lasttragglieds (213) und den Zinnen (252) der einzelnen länglichen Strebe (214) in Eingriff steht, beweglich ist.

8. Dachreling nach einem der Ansprüche 1 bis 7, wobei, wenn die einzelne längliche Strebe (214) von dem länglichen Lasttragglied (213) entriegelt ist, das längliche Lasttragglied (213) in einer Drehrichtung drehbar ist, um flach auf dem Dach (5) des Fahrzeugs (1), an dem die Dachreling (10) angebracht ist, aufzuliegen, und die einzelne längliche Strebe (214) in einer entgegengesetzten Drehrichtung drehbar ist, um flach auf dem Dach (5) des Fahrzeugs (1) aufzuliegen.

9. Dachreling nach einem der Ansprüche 1 bis 8, wobei der Querträgerteil (215) einen asymmetrischen Querschnitt aufweist, mit einer Dicke, die wesentlich kleiner als die Breite des Querträgerteils (215) ist, um die Zunahme der Fahrzeughöhe auf ein Minimum zu reduzieren, wenn die Dachreling (10) verstaut ist, während eine hohe Biegefestigkeit aufrechterhalten wird, wenn eine Last auf der Dachreling (10) in der ausgeklappten Position getragen wird.

10. Dachreling nach einem der Ansprüche 1 bis 9, bei der das Dach (5) des Kraftfahrzeugs (1) eine hohe Stelle und eine niedrige Stelle aufweist und die Dachreling (10) so angebracht ist, dass sie in einem Querkanal (8) mit offenem Ende im Dach (5) des Fahrzeugs (1) verstaut werden kann, wobei die Dicke der die Dachreling (10) bildenden Komponenten so ist, dass, wenn die Dachreling (10) in einen verstauten Zustand bewegt wird, kein Teil der verstauten Dachreling (10) unter der niedrigen Stelle des Dachs (5) und über der hohen Stelle des Dachs (5) positioniert ist.

11. Kraftfahrzeug (1) mit einem Dach (5), **dadurch gekennzeichnet, dass** mindestens zwei Dachrelinge (10) nach einem der Ansprüche 1 bis 10 an dem Dach (5) des Kraftfahrzeugs (1) in einer voneinander beabstandeten Beziehung befestigt sind.

12. Kraftfahrzeug nach Anspruch 10, wobei das Dach (5) des Kraftfahrzeugs (1) eine hohe Stelle und eine niedrige Stelle, die einer Höhe entspricht, unter der eine Fläche nicht selbstentleerend ist, und mehrere Querkanäle (8) mit offenem Ende aufweist, die jeweils zur Aufnahme einer verstauten Dachreling (10) bemessen sind, wobei jeder der Kanäle (8) eine Grundfläche (8b) aufweist, die nicht tiefer als die niedrige Stelle des Dachs (5) positioniert ist, so dass, wenn jede Dachreling (10), die an dem Dach (5) des Fahrzeugs (1) angebracht ist, in ihren jeweiligen verstauten Zustand bewegt wird, kein Teil jeder verstauten Dachreling (10) höher als die hohe Stelle des Dachs (5) positioniert ist, so dass die Gesamthöhe des Kraftfahrzeugs (1) durch die verstauten Dachrelinge (10) nicht vergrößert wird, und kein Teil jeder Dachreling (10) tiefer als die niedrige Stelle des Dachs (5) positioniert ist.

13. Kraftfahrzeug nach Anspruch 11, wobei das Dach einen konvexen mittleren Teil (7) aufweist, der auf jeder Seite durch eine sich in Längsrichtung erstreckende Ablaufrinne (9) begrenzt wird, und die niedrige Stelle des Dachs (5) der Höhe der Ablaufrinnen (9) entspricht.

14. Dachreling nach Anspruch 12, wobei jeder der Kanäle (8) eine Grundfläche (8b) aufweist, die nicht tiefer als die Höhe der Ablaufrinnen (9) positioniert ist, um zu gewährleisten, dass sie selbstentleerend ist.

## Revendications

1. Barre de toit pouvant être rangée (10) pour un véhicule automobile (1), comprenant un organe de support de charge allongé (213) connecté de manière pivotante à un toit (5) du véhicule (1) de manière à s'étendre en travers du véhicule (1) et un mécanisme d'accrochage (222, 255) pour retenir de manière sélective l'organe de support de charge allongé (213) dans un état déployé dans lequel une portion de traverse (215) de l'organe de support de charge allongé (213) est espacée au-dessus du toit (5) du véhicule (1), **caractérisée en ce qu'**une membrure allongée unique (214) peut être accrochée au moyen du mécanisme d'accrochage (222, 255) à l'organe de support de charge allongé (213) le long de la longueur de l'organe de support de charge allongé (213) pour retenir la barre de toit (10) dans l'état déployé.

2. Barre de toit selon la revendication 1, dans laquelle l'organe de support de charge allongé (213) comprend une portion de traverse (215) et une portion d'extrémité (216) à chaque extrémité de la portion de traverse (215), et la membrure allongée unique (214) comprend une portion centrale (217) et une portion de support (218) à chaque extrémité de la portion centrale (217).

3. Barre de toit selon la revendication 2, dans laquelle l'organe de support de charge allongé a un bord crénelé (251) formé sur la portion de traverse (215) et peut s'accrocher au moyen du mécanisme d'accrochage (222, 255) à un bord crénelé (252) de la portion centrale (217) de la membrure allongée unique (214) de manière à former un support porteur de charge quand la barre de toit (10) est dans l'état déployé.

4. Barre de toit selon la revendication 2 ou 3, dans laquelle la portion centrale (217) de la membrure allongée unique (214) est accrochée le long de toute sa longueur à la portion de traverse (215) de l'organe de support de charge allongé (213) par le mécanisme d'accrochage (222, 255).

5. Barre de toit selon l'une quelconque des revendications 2 à 4, dans laquelle la barre de toit (10) comprend en outre une paire de plaques de base (211) utilisées pour attacher la barre de toit (10) au toit (5) du véhicule automobile (1), chacune des plaques de base (211) étant connectée de manière pivotante à une portion de support respective (218) de la membrure allongée unique (214) à une extrémité et à une portion d'extrémité respective (215) de l'organe de support de charge allongé (213) à proximité d'une extrémité opposée.

6. Barre de toit selon l'une quelconque des revendications 1 à 5, dans laquelle le mécanisme d'accrochage (222, 255) peut être actionné depuis une extrémité de la barre de toit (10) de manière à permettre à la barre de toit (10) d'être rangée ou déployée depuis un côté du véhicule (1) auquel elle est attachée.

7. Barre de toit selon l'une quelconque des revendications 1 à 6, dans laquelle le mécanisme d'accrochage comprend une barre coulissant axialement en forme de J (255) qui peut être déplacée entre une position déverrouillée dans laquelle elle est engagée seulement avec les créneaux (251) de l'organe de support de charge allongé (213) et une position verrouillée dans laquelle elle est engagée avec les créneaux (252) de la membrure allongée unique (214).

8. Barre de toit selon l'une quelconque des revendications 1 à 7, dans laquelle, quand la membrure allongée unique (214) est détachée de l'organe de support de charge allongé (213), l'organe de support de charge allongé (213) peut tourner dans une direction de rotation de manière à se placer à plat sur le toit (5) du véhicule automobile (1) auquel la barre de toit (10) est attachée, et la membrure allongée unique (214) peut tourner dans une direction de rotation opposée de manière à se placer à plat sur le toit (5) du véhicule automobile (1).

9. Barre de toit selon l'une quelconque des revendications 1 à 8, dans laquelle la portion de traverse (215) a une section transversale asymétrique ayant une épaisseur qui est considérablement moins importante que la largeur de la portion de traverse (215) de manière à minimiser l'augmentation du poids du véhicule quand la barre de toit (10) est rangée tout en conservant une grande résistance à la flexion quand une charge est portée sur la barre de toit (10) dans l'état déployé.

10. Barre de toit selon l'une quelconque des revendications 1 à 9, dans laquelle le toit (5) du véhicule automobile (1) a un point haut et un point bas et la barre de toit (10) est attachée de manière à pouvoir être rangée dans un canal transversal à extrémités ouvertes (8) dans le toit (5) du véhicule (10), l'épaisseur des composants formant la barre de toit (10) étant telle que lorsque la barre de toit (10) est déplacée dans l'état rangé, aucune partie de la barre de toit rangée (10) ne soit située sous le point bas du toit (5) et au-dessus du point haut du toit (5).

11. Véhicule automobile (1) ayant un toit (5), **caractérisé en ce qu'**au moins deux barres de toit (10) selon l'une quelconque des revendications 1 à 10 sont attachées au toit (5) du véhicule automobile (1) dans une relation espacée.

12. Véhicule automobile selon la revendication 10, dans lequel le toit (5) du véhicule automobile (1) a un point haut et un point bas correspondant à une hauteur sous laquelle une surface n'est pas auto-drainante et un certain nombre de canaux transversaux à extrémités ouvertes (8) dimensionnés chacun de manière à recevoir une barre de toit rangée (10), chaque canal (8) ayant une surface de base (8b) située pas plus bas que le point bas du toit (5) de telle sorte que lorsque chaque barre de toit (10) attachée au toit (5) du véhicule (1) est déplacée dans son état rangé respectif, aucune partie de chaque barre de toit rangée (10) ne soit située plus haut que le point haut du toit (5) de sorte que la hauteur globale du véhicule automobile (1) ne soit pas accrue par les barres de toit rangées (10) et qu'aucune partie de chaque barre de toit (10) ne soit située en dessous du point bas du toit (5).

13. Véhicule automobile selon la revendication 11, dans lequel le toit a une portion centrale convexe (7) bordée de chaque côté par un drain s'étendant longitudinalement (9) et le point bas du toit (5) correspond à la hauteur des drains (9).

14. Véhicule automobile selon la revendication 13, dans lequel chaque canal (8) a une surface de base (8b) située pas plus bas que la hauteur des drains (9) de manière à s'assurer qu'il soit auto-drainant.
